# EUROPÄISCHE PATENTSCHRIFT

(11) **EP 0 823 365 B1**
(45) Veröffentlichungstag und Bekanntmachung des Hinweises auf die Patenterteilung: **15.05.2002**
(21) Anmeldenummer: 97109570.8
(22) Anmeldetag: 12.06.1997
(51) Int. Cl.: B62D 25/20

(54) **Mitteltunnel für ein Fahrzeug, insbesondere Kraftfahrzeug**
Centre tunnel for a vehicle, especially motor vehicle
Tunnel central pour véhicule, notamment véhicule automobile

(30) Priorität: 30.07.1996 DE 19630645
(43) Veröffentlichungstag der Anmeldung: 11.02.1998
(73) Patentinhaber: Dr.Ing.h.c. F. Porsche Aktiengesellschaft, 70435 Stuttgart (DE)
(72) Erfinder: Vlahovic, Josip, 74321 Bietigheim-Bissingen (DE)

(56) Entgegenhaltungen:
- EP-A- 0 494 552
- DE-A- 4 214 557

## Beschreibung

Die Erfindung betrifft einen Mitteltunnel für ein Fahrzeug, insbesondere Kraftfahrzeug, gemäß dem Oberbegriff des Patentanspruchs 1.

Die DE 24 08 548 C2 zeigt einen derartigen Mitteltunnel, der einstückig mit einem Bodenblech ausgebildet ist, wobei zur Versteifung des Mitteltunnels an dessen Innenseite zwei profilierte Schließbleche angebracht sind, die zusammen mit dem Mitteltunnel örtliche längsverlaufende Hohlträgerstrukturen bilden.

Ein derartiger Mitteltunnel erfordert hohe Werkzeug- und Montagekosten. Zudem ist der Mitteltunnel nur in Teilbereichen verstärkt, wogegen er im Übergangsbereich zum angrenzenden Bodenteil relativ weich ausgebildet ist.

Aufgabe der Erfindung ist es, einen Mitteltunnel so weiterzubilden, daß er bei einfachem Aufbau und kostengünstiger Fertigung hohe Kräfte aufnehmen kann.

Erfindungsgemäß wird diese Aufgabe durch die kennzeichnenden Merkmale des Anspruchs 1 gelöst. Weitere, die Erfindung in vorteilhafter Weise ausgestaltende Merkmale enthalten die Unteransprüche.

Die mit der Erfindung hauptsächlich erzielten Vorteile sind darin zu sehen, daß der mittels Innenhochdruckumformen gefertige Mitteltunnel einen einfachen Aufbau aufweist und kostengünstig herstellbar ist. Der nach unten hin offene, doppelwandige Hohlkörper zur Bildung des Mitteltunnels weist eine große Torsionssteifigkeit auf und kann große Kräfte aufnehmen, da er aus mehreren Hohlkammern zusammengesetzt ist. Zu diesem Zweck sind örtlich angrenzende Wandabschnitte des Hohlkörpers nach dem Innenhochdruckumformen mechanisch aneinandergefügt und zusätzlich fest miteinander verbunden (z.B. durch Vernieten).

Das Aneinanderfügen wird beispielsweise durch mechanisches Quetschen der Innenwandung oder der Außenwandung des Hohlkörpers erzielt. Ferner sind am Mitteltunnel außenseitig Auflagebereiche für angrenzende Karosserieteile ausgebildet.

Ein Ausführungsbeispiel der Erfindung ist in den Zeichnungen dargestellt und wird im folgenden näher beschrieben.

Es zeigen
- Fig. 1: eine perspektivische Teilansicht auf den Bodenbereich eines Kraftfahrzeuges mit einem Mitteltunnel,
- Fig. 2: einen Schnitt nach der Linie II-II der Fig. 1 und
- Fig. 3: in schematischer Darstellung die einzelnen Schritte zur Herstellung des Mitteltunnels.

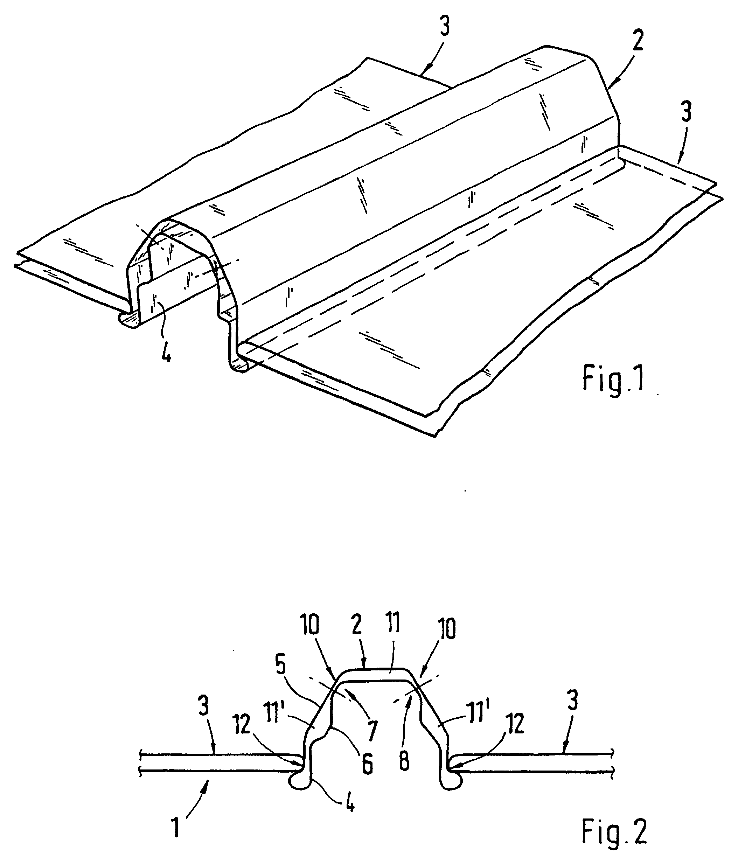

Die in Fig. 1 dargestellte Bodenstruktur 1 eines Kraftfahrzeuges umfaßt einen in Fahrzeuglängsrichtung verlaufenden Mitteltunnel 2, an den beiderseits Bodenabschnitte 3 angeschlossen sind. Die Bodenabschnitte 3 können jeweils durch ein herkömmliches einlagiges Bodenblech durch zwei in Höhenrichtung beabstandete Bodenbleche oder gemäß den Fig. 1 und 2 durch ein hohlkörperartiges Hydroformteil gebildet werden.

Der Mitteltunnel 2 wird - im Querschnitt gesehen - durch einen im Innenhochdruckumformverfahren gefertigten doppelwandigen Hohlkörper 4 aus Leichtmetall oder Stahl gebildet, der eine nach unten hin offene etwa U-förmige oder nutförmige Profilform aufweist, wobei zumindest örtlich beabstandete Wandabschnitte 5, 6 des Hohlkörpers 4 aneinandergeführt und fest miteinander verbunden sind. Der langgestreckte Hohlkörper 4 wird im Ausgangszustand durch ein Rohr oder ein Profil gebildet.

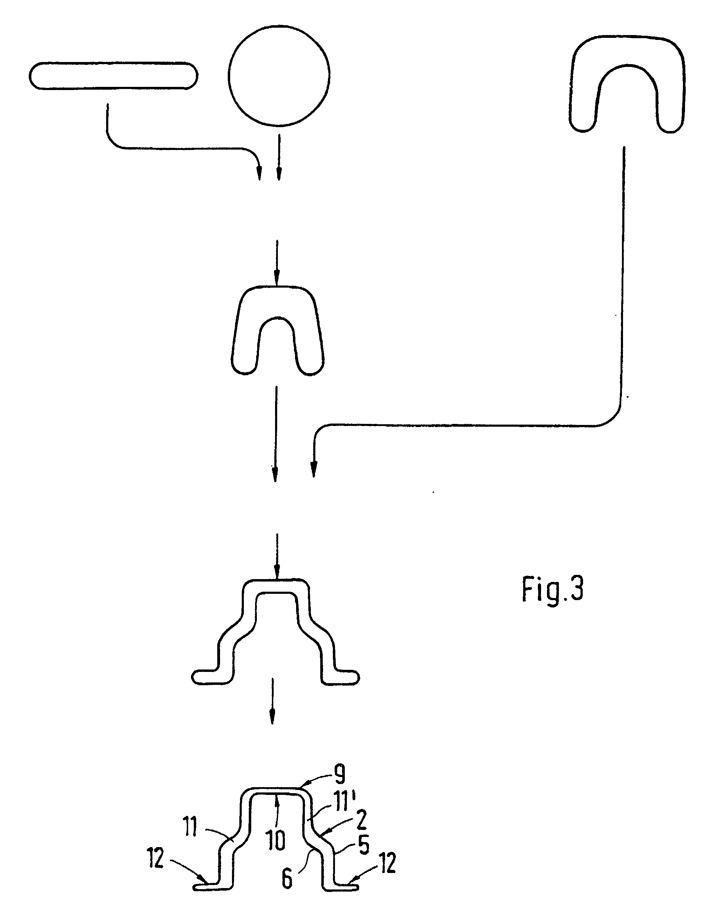

Fig. 3 zeigt die einzelnen Verfahrensschritte zur Herstellung des Mitteltunnels 2. Ein durch ein Rohr mit kreisförmigem Querschnitt oder nichtkreisförmigen Querschnitt gebildeter Rohling wird in einem ersten Verfahrensschritt mechanisch zu einem etwa U-förmigen Profil vorgeformt. Dieser Verfahrensschritt entfällt bei einem U-förmigen Profil. Danach erfolgt das Umformen des vorgeformten Rohlings bzw. des Profils mittels des Innenhochdruckumformverfahrens.

In einem weiteren Schritt erfolgt das mechanische Quetschen, so daß die Außenwandung 5 und die Innenwandung 6 örtlich aneinander anliegen.

Gemäß den Fig. 1 und 2 ist die Innenwandung 6 in einem oberen Bereich des Hohlkörpers 4 an schrägverlaufenden Bereichen 7, 8 an die Außenwandung 5 herangeführt. Dies erfolgt beispielsweise durch mechanisches Quetschen.

Bei dem in Fig. 3 dargestellten Mitteltunnel 2 ist ein oberer querverlaufender, etwa horizontal ausgerichteter Abschnitt 9 der Innenwandung 6 an die Außenwandung 5 herangeführt.

Durch die gemeinsamen Anlagebereiche 10 von Innen- und Außenwandung 5, 6 wird der Hohlkörper 4 zumindest in zwei angrenzende Hohlkammerabschnitte 11, 11' unterteilt. Zur zusätzlichen Versteifung können Innen- und Außenwandungen 5, 6 im gemeinsamen Anlagebereich 10 miteinander verbunden sein. Dies kann durch Schweißen, Kleben, Nieten oder dergleichen erfolgen. Der Mitteltunnel 2 weist - im Querschnitt gesehen - im gesamten Bereich eine Hohlträgerstruktur auf, die sich aus mehreren Hohlträgern zusammensetzt.

In einem unteren Bereich des etwa hutförmig profilierten Mitteltunnels 2 sind außenseitig Auflagebereiche 12 für angrenzende Karosserieteile ausgebildet.

Gemäß den Fig. 1 und 2 liegen an stufenförmigen Auflagebereichen 12 des Hohlkörpers 4 die horizontalen Bodenabschnitte 3 auf und sind dort befestigt (z.B. durch Kleben, Schweißen, Nieten oder dergleichen).

Entsprechend Fig. 3 sind Außen- und Innenwandung 5, 6 an den Auflagebereichen 12 ebenfalls zumindest bereichsweise aneinandergedrückt.

Der Mitteltunnel kann in Längsrichtung einen gleichbleibenden oder aber einen sich entlang seiner Längserstreckung verändernden Querschnitt aufweisen.

## Patentansprüche

1. Mitteltunnel für ein Fahrzeug, insbesondere Kraftfahrzeug, wobei der eine nach unten hin offene Profilform aufweisende Mitteltunnel (2) zumindest bereichsweise längsgerichtete hohlträgerartige Abschnitte besitzt, **dadurch gekennzeichnet, daß** der Mitteltunnel (2) - im Querschnitt gesehen - durch einen im Innenhochdruckumformverfahren hergestellten doppelwandigen Hohlkörper (4) gebildet wird, wobei beabstandete Wandabschnitte (5, 6) des Hohlkörpers (4) bereichsweise aneinandergeführt sind.

2. Mitteltunnel nach Anspruch 1, **dadurch gekennzeichnet, daß** der Hohlkörper (4) im Ausgangszustand rohrförmig oder U-förmig profiliert ist.

3. Mitteltunnel nach Anspruch 1, **dadurch gekennzeichnet, daß** beabstandete Wandungen (5, 6) des Hohlkörpers (4) nach dem Innenhochdruckumformen durch mechanisches Quetschen in gegenseitiger Anlage zueinander gebracht werden.

4. Mitteltunnel nach den Ansprüchen 1 bis 3, **dadurch gekennzeichnet, daß** die aneinanderliegenden Wandabschnitte (5, 6) des Hohlkörpers (4) zusätzlich miteinander verbunden sind.

5. Mitteltunnel nach Anspruch 1, **dadurch gekennzeichnet, daß** die aneinanderliegenden Wandabschnitte (5, 6) durch Schweißen, Kleben, Nieten oder dergleichen fest miteinander verbunden sind.

6. Mitteltunnel nach Anspruch 1, **dadurch gekennzeichnet, daß** am Mitteltunnel (4) außenseitig Auflagebereiche (12) für angrenzende Karosserieteile ausgebildet sind.

## Claims

1. A centre tunnel for a vehicle, in particular a motor vehicle, wherein the centre tunnel (2) having a profiled shape open at the bottom has portions in the manner of hollow supports orientated longitudinally at least in part, **characterized in that** the centre tunnel (2) - as viewed in cross-section - is formed by a double-walled hollow body (4) produced in the internal high-pressure shaping process, wherein spaced wall portions (5, 6) of the hollow body (4) are brought together in part.

2. A centre tunnel according to Claim 1, **characterized in that** the hollow body (4) is profiled in a tubular shape or in a U-shape in the initial state.

3. A centre tunnel according to Claim 1, **characterized in that** spaced wall portions (5, 6) of the hollow body (4) are brought together in mutual abutment by mechanical squeezing after the internal high-pressure shaping.

4. A centre tunnel according to Claims 1 to 3, **characterized in that** the mutually adjacent wall portions (5, 6) of the hollow body (4) are additionally joined to each other.

5. A centre tunnel according to Claim 1, **characterized in that** the mutually adjacent wall portions (5, 6) are firmly joined together by welding, adhesion, riveting or the like.

6. A centre tunnel according to Claim 1, **characterized in that** abutment regions (12) for adjoining parts of the bodywork are formed on the outside of the centre tunnel (4).

## Revendications

1. Tunnel central pour un véhicule, en particulier un véhicule automobile, un tunnel central (2) qui présente une forme profilée ouverte vers le bas, comportant, au moins par endroits, des parties de type poutre creuse orientées longitudinalement, **caractérisé en ce que** le tunnel central (2) - vu en coupe transversale - est formé par un corps creux (4) à double paroi fabriqué par un procédé de formage sous haute pression interne, des parties de paroi (5, 6) espacées du corps creux (4) étant réunies par endroits.

2. Tunnel central selon la revendication 1, **caractérisé en ce que** le corps creux (4) est profilé en forme de tube ou de U à l'état initial.

3. Tunnel central selon la revendication 1, **caractérisé en ce que** des parois (5, 6) espacées du corps creux (4) sont amenées en application réciproque, après le formage sous haute pression interne, par écrasement mécanique.

4. Tunnel central selon les revendications 1 à 3, **caractérisé en ce que** les parties de paroi (5, 6) s'appliquant l'une contre l'autre du corps creux (4) sont en outre reliées entre elles.

5. Tunnel central selon la revendication 1, **caractérisé en ce que** les parties de paroi (5, 6) appliquées l'une contre l'autre sont reliées fixement entre elles par soudage, collage, rivetage ou similaire.

6. Tunnel central selon la revendication 1, **caractérisé en ce que** sur le tunnel central (4) sont formées des zones d'appui (12) sur le côté extérieur pour des parties de carrosserie adjacentes.
